# EUROPÄISCHE PATENTSCHRIFT

(11) **EP 1 291 536 B1**
(45) Veröffentlichungstag und Bekanntmachung des Hinweises auf die Patenterteilung: **13.02.2008**
(21) Anmeldenummer: 01121599.3
(22) Anmeldetag: 11.09.2001
(51) Int. Cl.: F16C 1/26

(54) **Vorrichtung zur Befestigung eines langgestreckten Elementes**
Device for fastening an elongated element
Dispositif pour fixer un élement allongé

(43) Veröffentlichungstag der Anmeldung: 12.03.2003
(73) Patentinhaber: Ford Global Technologies, LLC, Dearborn, MI 48126 (US)
(72) Erfinder: Oeltjebruns, Thomas, 41542 Dormagen-Straberg (DE)
(74) Vertreter: Drömer, Hans-Carsten

(56) Entgegenhaltungen:
- EP-A- 0 365 243
- EP-A- 1 114 937
- GB-A- 1 395 546
- US-A- 5 596 908
- US-A- 5 613 406

## Beschreibung

Die Erfindung bezieht sich auf eine Vorrichtung zur Befestigung eines langgestreckten Elementes.

Langgestreckte Elemente, auf die sich die Erfindung bezieht, werden insbesondere im Fahrzeugbau beispielsweise als Betätigungszüge, auch als Bowdenzüge bezeichnet, verwendet. Solche Betätigungszüge bestehen im allgemeinen aus einem in Längserstreckung des Zuges weitgehend druckfesten Mantel, der jedoch quer zu seiner Längserstreckung biegbar ist. Realisiert wird dies im allgemeinen durch ein Stahlband, dass wendelförmig zu einem Rohr gewickelt wird. Nachfolgend wird üblicherweise dieses gewendelte Rohr mit einem Kunststoffüberzug versehen, um ein Eintreten von Feuchtigkeit und Schmutz in den Mantel des Zuges zu vermeiden und die Stahlbandspirale vor Korrosion zu schützen. Die Hülle kann aber auch aus einfachen Längslitzen realisiert sein, die mit einem geeigneten Kunststoff umspritzt sind. Innerhalb des Mantels, der zur Verminderung der Reibung häufig auch mit einer PTFE-Beschichtung oder -Innenhülle versehen ist, wird üblicherweise eine sogenannte Seele geführt, die im allgemeinen aus einem Draht oder einer Drahtlitze gebildet wird und gegenüber dem Mantel längsbeweglich ist.

Solche Betätigungszüge dienen der Übertragung von Zug-, manchmal auch Druckkräften in geringerer Größe sowie der Übertragung von Betätigungswegen. Vorrangige Einsatzgebiete sind dabei Haubenentriegelungen, Drosselklappenbetätigungen, bei kleineren Fahrzeugen und Motorrädem auch die Kupplungsbetätigung, ferner insbesondere bei Motorrädem die Betätigung von Kaltstarteinrichtungen (Choke), Brems- und Schaltungsbetätigungen bei Fahrrädern sowie die Getriebebetätigung insbesondere bei Fahrzeugen mit quer eingebauten Motor-/Getriebeeinheiten. Dabei werden zur Übertragung die Relativkräfte oder Relativbewegungen zwischen Seele und Mantel ausgenutzt.

Üblicherweise wird der Mantel dabei rahmenfest am Fahrzeug festgelegt, so dass die Seele Bewegungen oder Kräfte relativ zum Fahrzeugrahmen überträgt.

Wesentlicher Vorteil solcher Betätigungszüge ist die flexible Verlegemöglichkeit, so dass Kräfte und Wege mechanisch einfach auch an schlecht erreichbare Stellen übertragen werden können, oder auch auf beweglich angeordnete Fahrzeugteile, wie z. B. eine weich aufgehängte Motor-/Getriebeeinheit.

Gegenüber Betätigungsgestängen sind solche Betätigungszüge in der Regel wesentlich leichter und einfacher zu montieren.

Bei der Montage solcher Betätigungszüge wird herkömmlich ein Ende der Seele fabrikseitig mit einem Nippel verpresst, der bei der Montage in eine entsprechende Aufnahme des Betätigungselementes, z. B. einem Gaspedal, eingehängt wird. Der Mantel wird üblicherweise in ein pfannenförmiges Widerlager eingehängt, das beispielsweise am Pedalträger vorgesehen ist. Nun wird der Zug auf dem vorgesehenen Weg durch die Spritzwand und den Motorraum verlegt und der Mantel in der Nähe der Drosselklappe in eine Schraubklemme geführt und durch Anziehen einer Schraube z. B. am Luftansaugsystem festgelegt. Die Seele wird an einem Betätigungshebel der Drosselklappe eingefädelt und durch entsprechendes Verschieben und Festlegen eines Schraubnippels mit dem Drosselklappenhebel verbunden. Je nach Anordnung können weitere Justierschritte erforderlich sein, um z. B. den Weg der Drosselklappe an den Betätigungsweg des Gaspedals zwischen dessen Endanschlägen anzupassen. Bei der Montage ist zweckmäßig darauf zu achten, dass keine Verdrillung des Mantels erfolgt, wodurch die Montage erschwert wäre, sowie in der Regel eine erhöhte Reibung zwischen Seele und Mantel verursacht wird. In extremen Fällen kann es auch zu einer Verlängung oder Verkürzung des Mantels kommen, wodurch unerwünschte Betätigungseffekte entstehen können.

Um Justagearbeiten bei der Befestigung des Mantels solcher Züge zu vermeiden und insbesondere auch die Montagearbeit zu vereinfachen und zu beschleunigen, sowie zur Vermeidung von Verdrillungen des Mantels, wurden in der Vergangenheit eine Reihe von Weiterentwicklungen vorgenommen.

Aus DE G 94 00 555 U1 ist eine Vorrichtung zur Befestigung des Mantels eines langgestreckten Betätigungszuges an einem Hülsrohr bekannt, durch das die Seele eines solchen Betätigungszuges weitergeführt wird. Dabei wird zur Vermeidung von Drallbeanspruchung des Mantels des Betätigungszuges eine Kugelpfannenanordnung vorgeschlagen, wobei die Kugelgelenkpfanne mehrteilig aus verschiedenen Kunststoff- und Metallteilen hergestellt und mit dem Mantel des Betätigungszuges verpresst wird. Die Kugelgelenkpfanne ist auf ein Hülsrohr aufschnappbar, das ebenfalls aus einem Kunststoff hergestellt sein soll, und bei dem ein Ende verdickt ist und außenseitig sphärisch als Kugelgelenkkopf ausgebildet sein soll, um die Kugelgelenkpfanne des Befestigungselementes aufzunehmen. Durch die beschriebene Ausbildung soll eine Winkelbeweglichkeit zwischen Führungsrohr und dem Mantel des Betätigungszuges einerseits und eine Drehbeweglichkeit andererseits erzielt werden.

In einer weiteren Ausführungsform weist der mit dem Mantel des Betätigungszuges verbundene Kugelpfannenteil auf der Außenseite Federelemente auf, mit denen der Kugelpfannenteil samt Mantel des Betätigungszuges, beispielsweise in einem Loch in einer Blechwand, durch Einschnappen befestigbar ist. Durch weitere Federelemente soll ein spielfreier Sitz innerhalb des Loches des Blechteiles erreicht werden.

Aus WO 98/23875 ist ebenfalls ein Befestigungselement zur Verbindung eines Bowdenzuges mit einem Hülsrohr bekannt, bei dem ebenfalls ein Ende des Hütsrohrs nach Art eines Kugelgelenks ausgeformt sein soll und ein zur Befestigung auf dem Ende des Betätigungszuges ausgebildetes Befestigungsteil vorgesehen ist, in dem eine Kugelpfanne ausgebildet wird. Auch hier wird eine solche Anordnung vorgeschlagen insbesondere zur Vermeidung von Verdrillungen des Mantels eines Betätigungszuges.

Aus EP 0 703 395 B1 und DE 695 08 507 T2 ist ein System zur axialen Festlegung eines langgestreckten Elements bekannt, bei dem ein Befestigungselement in nicht näher beschriebener Weise auf einem nicht näher spezifizierten langgestreckten Element koaxial befestigt ist, um das langgestreckte Element in einer im wesentlichen U-förmigen Aussparung einer Wand radial und axial festzulegen.

Dazu umfasst das Befestigungselement einen Grundkörper, der im wesentlichen einen Abschnitt mit einem größeren Außendurchmesser und einen Abschnitt mit einem kleineren Außendurchmesser aufweist. Dieser Grundkörper ist auf dem langgestreckten Element festgelegt. Der Abschnitt mit dem größeren Außendurchmesser dient als Widerlager des Befestigungselementes auf einer Seite der Wand. Auf dem Abschnitt mit dem kleineren Durchmesser ist ein Rundschnurring angeordnet sowie eine Mutter, die über ein auf dem Abschnitt mit dem geringeren Durchmesser vorgesehenes Gewinde in Längsrichtung des langgestreckten Elementes bewegbar ist.

Weiterhin ist eine Feder vorgesehen, die entweder in Ausbildung als Schraubendruckfeder oder als Schenkelfeder zwischen dem Grundelement und der Mutter wirkt, derart, dass die Mutter gegen die Federkraft von dem Abschnitt mit dem größeren Außendurchmesser wegbewegt werden kann und nach Loslassen der Mutter diese über die Feder gegen den Abschnitt mit dem größeren Außengewinde betätigt wird. Die Wand, an der das langgestreckte Element festgelegt werden soll, ist dabei zwischen der Mutter und dem Abschnitt mit dem. größeren Außendurchmesser einzufädeln, wobei der O-Ring aufgrund der üblicherweise kautschukähnlichen Materialzusammensetzung zur Aufbringung einer elastischen Vorspannkraft und Erhöhung der Reibung gegenüber der Wand dient. Mag damit das reine Montieren in dem U-förmigen Ausschnitt einer Wand bei zurückgezogener Mutter noch einigermaßen einfach sein, so ist jedoch die Vorbereitung dazu, nämlich das Zurückdrehen der Mutter gegen die Federvorspannung, umständlich und langwierig und kaum unter erschwerten Montagebedingungen durchzuführen.

Schließlich ist aus GB 2 346 186 A ein Befestigungssystem bekannt, bei dem eine Befestigungshülse beschrieben ist, die in nicht näher angegebener Weise auf dem Mantel eines Bowdenzuges befestigt sein soll. Die Befestigungshülse umfasst an einem Ende einen Flansch und an ihrem anderen Ende einen Federtopf zur Aufnahme einer Druckfeder, die konzentrisch um den inneren Teil der Hülse gewickelt ist. Zwischen den beiden Enden der Hülse ist ein Ring angeordnet, der gegenüber der Hülse in axialer Richtung beweglich ist und der von der Schraubendruckfeder gegen den Flansch gedrückt wird. Zieht man den Ring von Hand gegen den Federtopf zurück, entsteht zwischen Ring und Flansch eine Nut, mit der das Befestigungselement in einen U-förmigen Ausschnitt einer Wand oder eines Halters eingeschoben werden kann. Durch Loslassen des Ringes wird dieser durch die Federkraft gegen das Blech oder den Halter gedrückt.

In dem Ring befindet sich an der dem Flansch zugewandten Stirnseite eine umlaufende Nut, die mit einem keilförmigen Vorsprung auf dem Halter oder der Blechwand korrespondiert, so dass das Befestigungselement nicht mehr aus der U-förmigen Aussparung herausgezogen werden kann, so lange der Ring an der Wand oder dem Halter anliegt. Entsprechend muss zum Lösen des Befestigungselementes von dem Halter oder der Wand der Ring gegen die Federkraft zurückgezogen werden, bevor das Befestigungselement aus der U-förmigen Aussparung des Halters oder der Wand entnommen werden kann.

Nähere Angaben, wie ein solches Befestigungselement aufgebaut und insbesondere hergestellt sein soll, sind in der angegebenen Druckschrift nicht zu finden. Es liegt aber auf der Hand, dass das Befestigungselement aus einer Vielzahl von Einzelteilen aufgebaut sein muss, was die Montage bei der Herstellung aufwendig macht, insbesondere, da die dort vorgesehene Feder im vorgespannten Zustand montiert werden muss.

Aus der EP 114937 ist in Übereinstimmung mit dem Oberbegriff des Anspruchs 1 eine Vorrichtung zur Befestigung eines langgestreckten Elementes bekannt mit einem Halter, der auf seiner Langseite eine zu seinem Rand hin offene, U-förmige Ausnehmung aufweist. In dieser Ausnehmung wird ein Zentralkörper, der das langgestreckte Element über einen Teil seiner Längserstreckung umschließt, mittels einer radial angeordneten Nut in axialer Richtung festgelegt. Zwei sich im wesentlichen radial auswärts erstreckende Flanschelement, vor und hinter der radialen Nut am Zentralkörper angeordnet, weisen zur federelastischen Verbindung mit dem Halter zwei federnd abgebogene Flanschenden auf, die in Kerben am Halter eingreifen, wenn der Zentralkörper mit der radialen Nut vollständig in die Ausnehmung eingeführt ist. Allerdings muß der Zentralkörper immer in einer genauen Winkellage zum Halter gebracht werden, damit die federnden Flansche in den Nuten des Halters einrasten könnten, ist der Zentralkörper relativ zum Halter verdreht, kann er nicht montiert werden, sondern muß erst entsprechend in die richtige Lage gedreht werden, insbesondere bei der Verwendung eines Bowdenkabels als langgestrecktes Element erfordert dies einen gewissen Zeit- und Kraftaufwand.

Der Erfindung liegt daher die Aufgabe zugrunde, eine Vorrichtung der eingangs erwähnten Art bereitzustellen, die nicht nur einfach zu montieren, sondern auch preiswert herzustellen ist. Ferner ist es Ziel der Erfindung, die Befestigung eines langgestreckten Elementes bei der Montage weiter zu vereinfachen.

Diese Aufgabe wird erfindungsgemäß gelöst durch die Merkmale des Anspruchs 1.

Durch die erfindungsgemäße Ausbildung wird es möglich, Vorrichtungen der eingangs erwähnten Art gegenüber den aus dem Stand der Technik bekannten Ausführungsformen wesentlich einfacher und vor allem kostengünstiger herzustellen. Insbesondere wird es möglich, eine einfach zu montierende Vorrichtung vorzusehen, bei der keine separate Feder unter Vorspannung montiert werden muss und entsprechend auch kein separat zu montierendes Widerlager für die Feder. Weiterhin ist auch eine stark verbesserte Betriebssicherheit gewährleistet, da keine Notwendigkeit zur Verwendung verschiedener und insbesondere korrosionsanfälliger Materialien, wie Federstahldraht, besteht. Aufgrund des einfacheren Aufbaus lassen sich auch Defekte durch fehlerhafte Teilemontage weitgehend ausschließen. Da keine Relativbewegungen von Einzelteilen erfolgen, sind Beeinträchtigungen der Funktion, beispielsweise durch Verschmutzung, praktisch ausgeschlossen.

Ganz besonders wirtschaftlich ist die erfindungsgemäße Vorrichtung, wenn die Vorrichtung einstückig ausgebildet ist, z. B. aus Kunststoffspritzguss. Dabei kann die Vorrichtung, wenn einstückig ausgebildet, auch aus verschiedenen Materialen bestehen, um unterschiedliche Funktionen der Vorrichtung zu verbessern. Z. B. ist es denkbar, einzelne Bereiche der Vorrichtung aus einem elastischen, gummiartigen Bereich zum Zwecke der Geräuschdämmung zu gestalten, während z. B. die Mittel zur federelastischen Verbindung aus einem wesentlich steiferen Material bestehen.

Fertig konfektionierte Betätigungszüge, bei deren Montage praktisch keine Justierarbeiten mehr anfallen, lassen sich erhalten, wenn zumindest der Zentralkörper einstückig mit dem langgestreckten Element oder einem Teil davon ausgebildet ist, z.B. mit angespritzt ist.

Eine besonders einfache Montage wird möglich, wenn die Nut radial umlaufend ausgebildet ist, da von dem Monteur keinerlei Orientierung des langgestreckten Elementes um seine Längsachse beachtet werden muss.

Besonders montage- und betriebssicher ist die erfindungsgemäße Vorrichtung, wenn das Flanschelement sich bis zum radial äußeren Umfang erstreckende Schlitze oder Ausnehmungen aufweist, wobei zwischen benachbarten Schlitzen oder Ausnehmungen Zungen gebildet sind. So bilden sich jeweils einzelne federnde Zungen, die ein sicheres Verrasten bei nur geringen Montagekräften ermöglichen.

Dabei ist es besonders zweckmäßig, wenn die Mittel zur federelastischen Verbindung mit dem Halter auf der der Nut zugewandten Stirnseite des Flanschelementes angeordnet sind.

In einer bevorzugten Ausführungsform ist die erfindungsgemäße Vorrichtung dadurch gekennzeichnet, dass die Mittel zur federelastischen Verbindung mit dem Halter wenigstens eine koaxial angeordnete keil- oder dachförmige Erhebung umfassen, wobei sich die keil- oder dachförmige Erhebung zumindest von dem radial äußeren Rand des Flanschelementes aus radial einwärts erhebt.

Für eine besonders sichere Montage auch an nicht oder schwer einsehbaren Stellen ist es weiterhin vorteilhaft, wenn jede Zunge eine koaxial angeordnete keil- oder dachförmige Erhebung aufweist.

Für eine vorgesehene Demontage, z.B. bei Befestigung an Bauteilen, die zu Wartungszwecken regelmäßig ausgebaut werden müssen, ist es besonders zweckmäßig, wenn wenigstens eine der dach- oder keilförmigen Erhebungen beidseitige Schrägen aufweist, so dass das Element mit einer vorbestimmbaren Demontagekraft beschädigungsfrei lösbar ist.

Es kann aber auch zweckmäßig sein, anstelle der Erhebungen vorzusehen, dass jede Zunge als Mittel zur federelastischen Verbindung mit dem Halter eine koaxial angeordnete Rastnut aufweist, die sich zumindest über einen Teil der Breite der Zunge erstreckt. In Verbindung mit einem Halter, der seinerseits eine Erhebung zum Eingriff in die Rastnut aufweist, kann so eine beliebige Winkelbeweglichkeit des langgestreckten Elementes um seine Längsachse besonders einfach erhalten werden.

In einer besonders einfach z.B. im Kunststoffspritzguss herstellbaren Ausführungsform ist die erfindungsgemäße Vorrichtung dadurch gekennzeichnet, dass der die im wesentlichen halbkreis- oder U-förmige Ausnehmung umgebende Bereich eine größere Dicke aufweist, als benachbarte Bereiche.

Besonders zweckmäßig für eine einfache und preiswerte Befestigung ist es, wenn die Vorrichtung in der Schmalseite im wesentlichen symmetrisch ausgebildet ist, so dass der Halter in beliebig orientierter Montage verwendet werden kann.

Die Erfindung soll im folgenden anhand eines in den Figuren dargestellten Ausführungsbeispiels näher erläutert werden. Es zeigen:
- Fig. 1: eine erfindungsgemäße Vorrichtung als Befestigungselement an dem Mantel eines Betätigungszuges in Seitenansicht;
- Fig. 2: das Befestigungselement aus Figur 1 in Draufsicht auf die Stirnseite;
- Fig. 3: eine erste Ausführungsform einer erfindungsgemäßen Vorrichtung als Halter, auf die Langseite gesehen;
- Fig. 4: den Halter aus Figur 3 in Querschnittansicht;
- Fig. 5: eine weitere erfindungsgemäße Ausführungsform der Vorrichtung als Halter;
- Fig. 6: den Halter gem. Figur 5 in Querschnittdarstellung;
- Fig. 7: eine weitere alternative Ausführungsform des Halters ähnlich Figur 5 im Querschnitt;
- Fig. 8: erfindungsgemäße Vorrichtungen gemäß Figur 1 und 3 während der Montage;
- Fig. 9: erfindungsgemäße Vorrichtungen gemäß Figur 1 und 3 nach erfolgter Montage, im Querschnitt; und
- Fig. 10: eine Draufsicht auf die Anordnung der Teile gemäß Figur 9.

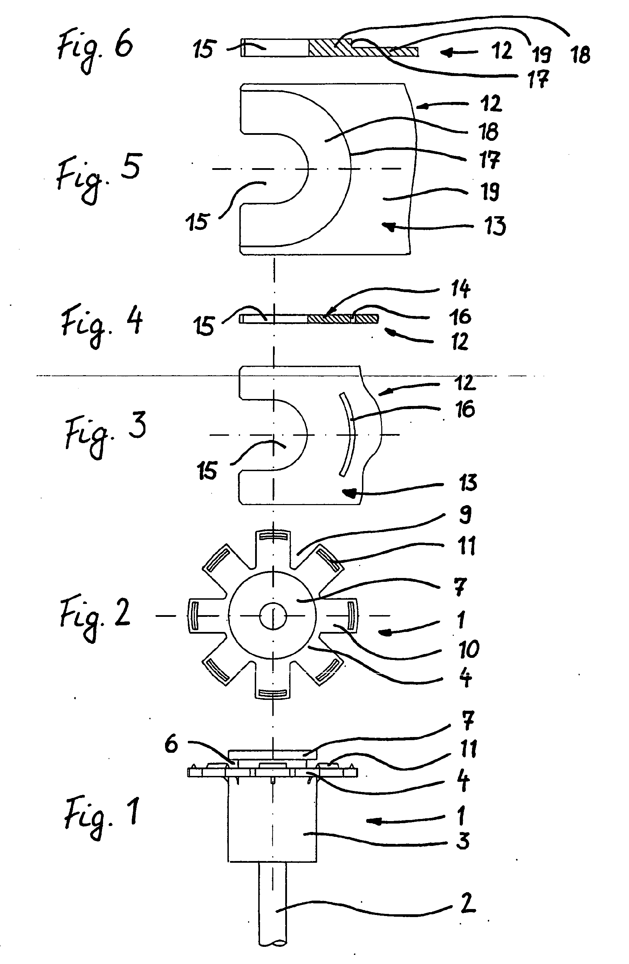

Die in Figur 1 dargestellte erfindungsgemäße Vorrichtung ist als Befestigungselement 1 zur Anbringung an einem langgestreckten Element 2 ausgebildet, hier als Mantel eines Betätigungszuges, wie er als Bowdenzug bekannt ist. Anstelle eines solchen Bowdenzuges kann das langgestreckte Element 2 aber auch eine andere Ausbildung aufweisen, beispielsweise durch eine Kunststoffleitung einer Scheibenwaschanlage gebildet sein. Für die nachfolgende Beschreibung wird davon ausgegangen, dass es sich bei dem langgestreckten Element 2 um einen Mantel eines Bowdenzuges handelt.

Das in Figur 1 gezeigte Befestigungselement 1 weist- einen Zentralkörper 3 auf, der den Mantel 2 koaxial umschließt. In einer besonders bevorzugten Ausführungsform ist der Zentralkörper 3 an den Mantel 2 bzw. dessen Kunststoffumhüllung mit angespritzt.

Von dem Zentralkörper 3 aus erstreckt sich im wesentlichen radial auswärts ein Flanschelement 4, das in geeigneter Weise vorzugsweise einteilig mit dem Zentralkörper 3 im Spritzgussverfahren hergestellt wird. Das Flanschelement 4 dient dabei zur Abstützung des Mantels 2 des Bowdenzuges an einem Bauteil, um Relativkräfte zu der Seele eines solchen Bowdenzuges aufnehmen zu können.

Vorzugsweise in Richtung auf das Ende 5 des Mantels 2 ist benachbart zu dem Flanschelement 4 eine vorzugsweise radial umlaufende Nut 6 angeordnet, die gegenüberliegend von dem Flanschelement 4 durch einen Bund 7 begrenzt wird.

Vorzugsweise ist dabei die Nut 6 rotationssymmetrisch um eine Längsachse 8 des Mantels 2 ausgebildet, so dass eine Montage des Befestigungselementes 1 ohne Rücksicht auf eine Orientierung um die Längsachse 8 erfolgen kann. Bei entsprechender Dimensionierung kann dabei zugleich eine Drehbeweglichkeit erhalten werden, so dass eine etwaige Relativbewegung zwischen Bauteilen, die über den Betätigungszug verbunden werden sollen, nicht zu einer Verdrillung des Mantels 2 führt.

Wie insbesondere auch in Figur 2 gut zu erkennen ist, ist das Flanschelement 4 durch sich bis zum radial äußeren Umfang erstreckende Ausnehmungen 9 unterteilt, so dass zwischen benachbarten Ausnehmungen 9 Zungen 10 gebildet sind. So sind jeweils einzelne federnde Zungen 10 gebildet, die ein sicheres Verrasten bei nur geringen Montagekräften ermöglichen.

Auf der der Nut 6 zugewandten Seite der Zungen 10 sind vorzugsweise auf jeder der Zungen 10 im wesentlichen koaxial zu dem Zentralkörper 3 angeordnete keil- oder dachförmige Erhebungen 11 als Mittel zur federelastischen Verbindung mit einem Halter angeordnet. Die Erhebungen 11 sind so gestaltet, dass sie sich von dem radial äußeren Rand des Flanschelementes 4 bzw. der Zungen 10 aus radial einwärts erheben, so dass sich bei einer keilförmigen Erhebung 11 die steilere Kante radial innen befindet.

Für eine vorgesehene Demontage, z.B. bei Befestigung an Bauteilen, die zu Wartungszwecken regelmäßig ausgebaut werden müssen, ist es besonders zweckmäßig, wenn die Erhebungen 11 beidseitige Schrägen aufweisen nach Art eines Daches, so dass das Befestigungselement 1 mit einer vorbestimmbaren Demontagekraft beschädigungsfrei wieder lösbar ist.

Wird, wie bevorzugt, der Zentralkörper 3 mit dem Flanschelement 4 sowie der Nut 6 und Bund 7 aus einem Kunststoff, vorzugsweise aus einem faserverstärkten Kunststoff, z.B. durch Spritzgießen hergestellt, ergibt sich eine Federelastizität des Flanschelementes 4 in Richtung der Längsachse 8.

Die in Figur 3 dargestellte erfindungsgemäße Vorrichtung ist als Halter 12 zur Befestigung eines langgestreckten Elementes 2 mit einem Befestigungselement 1 an einem beliebigen Bauteil, z.B. einem Fahrzeuggetriebe, ausgebildet. Der Halter 12 hat eine Langseite 13, entlang der der Halter 12 eine größere Ausdehnung aufweist, als entlang einer Schmalseite 14. Auf seiner Langseite 13 weist der Halter 12 eine zu seinem Rand hin offene, im wesentlichen halbkreis- oder U-förmige Ausnehmung 15 auf, wobei auf der Langseite 13 wenigstens eine Nut, Ausnehmung 16 oder ein Rand 17 (siehe Figuren 5, 6 und 7) annähernd koaxial zu der im wesentlichen halbkreis- oder U-förmigen Ausnehmung 15 vorgesehen ist, um mit wenigstens einer keil- oder dachförmigen Erhebung 11 des Befestigungselementes 1 federelastisch zusammenzuwirken, derart, dass ein solches in die im wesentlichen halbkreis- oder U-förmige Ausnehmung 15 eingeführtes Befestigungselement 1 selbsttätig gegen unbeabsichtigtes Lösen gesichert ist.

Die in den Figuren 3 und 4 dargestellte Ausführungsform des Halters 12 kann beispielsweise aus einem Metallblech durch Stanzen hergestellt werden, wobei die äußere Form, die U-förmige Ausnehmung 15 und die Ausnehmung 16 zur Aufnahme eines federelastischen Elementes 10, 11 des Befestigungselementes 1 in einem Arbeitsgang ausgestanzt werden können, ebenso wie beispielsweise ein nicht dargestelltes Befestigungsloch zum Anschrauben des Halters 12.

Die in den Figuren 5 und 6 dargestellte Ausführungsform des Halters 12 kann beispielsweise durch Spritzguss in Kunststoff hergestellt werden, wobei der Rand 17 gebildet wird dadurch, dass der die im wesentlichen halbkreis- oder U-förmige Ausnehmung 15 umgebende Bereich 18 eine größere Dicke aufweist, als benachbarte Bereiche 19. Bei der Herstellung durch Kunststoffspritzguss lassen sich auch leicht komplizierte Geometrien für den Halter 12 entsprechend dem vorgesehenen Einbauort realisieren, bei der Auswahl eines geeigneten und gegebenenfalls entsprechend hoch verstärkten Kunststoffes wird eine große mechanische Festigkeit erzielt.

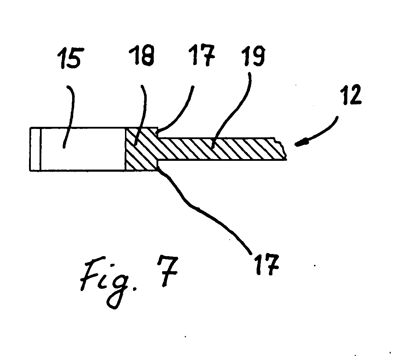

Besonders zweckmäßig für einen einfache und preiswerte Befestigung ist es, wenn der Halter 12 in der Schmalseite 14 im wesentlichen symmetrisch ausgebildet ist, so dass der Halter 12 um die U-förmige Ausnehmung 15 jeweils auf seiner Vorder- und Rückseite einen Rand 17 aufweist und in beliebig orientierter Montage verwendet werden kann (Figur 7).

Insbesondere bei der Ausbildung eines Halters 12 mit einem Rand 17 ergibt sich bei entsprechender Auslegung der Abmessungen der Nut 6 in Verbindung mit einem Befestigungselement 1 wie dargestellt eine freie Drehbeweglichkeit des Befestigungselementes 1 um die Längsachse 8 des langgestreckten Elementes 2 und damit die Möglichkeit einer drallfreien Verlegung z.B. eines Betätigungszuges.

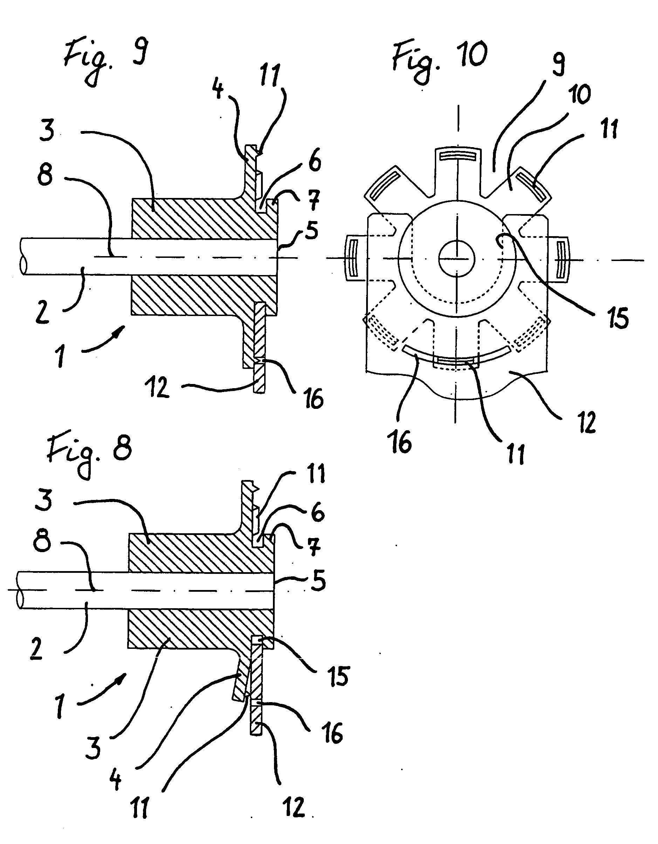

Zur Verlegung eines Betätigungszuges oder eines anderen langgestreckten Elementes 2 mit Hilfe der erfindungsgemäßen Vorrichtungen wird, wie in Figur 8 dargestellt, das Befestigungselement 2 mit der Nut 6 in die U-förmige Ausnehmung 15 des Halters 12 eingeführt. Durch die Elastizität der Zungen 10 werden diese mit den vorstehenden Erhebungen 11 durch den Halter 12 elastisch nach hinten gebogen, bis der Halter die in Figur 9 dargestellte Endlage erreicht hat. In dieser Position federt die Zunge zurück in ihre ursprüngliche Lage und die Erhebung11 greift in die Ausnehmung 16 des Halters 12 ein und verhindert dessen unbeabsichtigtes Herausrutschen. Zur Verdeutlichung ist in Figur 10 die Endlage der beiden Teile 2 und 12 in Draufsicht auf die Längsachse 8 des Betätigungszuges 2 dargestellt. Auf Details des Betätigungszuges 2, insbesondere eine Darstellung der Seele, wurde wegen der Übersichtlichkeit verzichtet.

Es kann aber auch zweckmäßig sein, anstelle der Erhebungen 11 eine koaxial angeordnete Rastnut vorzusehen (nicht dargestellt), die sich zumindest über einen Teil, vorzugsweise die gesamte, Breite einer Zunge 10 erstreckt. In Verbindung mit einem Halter, der seinerseits eine Erhebung zum Eingriff in die Rastnut aufweist, kann so eine beliebige (Dreh-)Winkelbeweglichkeit des langgestreckten Elementes um seine Längsachse 8 besonders einfach erhalten werden.

## Patentansprüche

1. Vorrichtung zur Befestigung eines langgestreckten Elementes (2), mit einem Zentralkörper (3), der das langgestreckte Element (2) über einen Teil seiner Längserstreckung umschließt, und einem Halter (12) mit einer Langseite (13) und einer Schmalseite (14), wobei der Halter (12) auf seiner Langseite (13) eine zu seinem Rand hin offene, im wesentlichen halbkreis- oder U-förmige Ausnehmung (15) aufweist und der Zentralkörper (3) ferner eine radial angeordnete Nut (6) zur Aufnahme des Halters (12) sowie ein sich im wesentlichen radial auswärts erstreckendes Flanschelement (4) umfasst, das Mittel (11) zur federelastischen Verbindung mit dem Halter (12) aufweist, derart, daß der in die Nut (6) eingeführte Halter (12) selbsttätig gegen unbeabsichtigtes Lösen in im wesentlichen radialer Richtung gesichert ist,
**dadurch gekennzeichnet, dass**
auf der Langseite (13) des Halters (12) entweder wenigstens eine Nut, Ausnehmung (16), Rand (17) oder eine Erhebung annähernd koaxial zu der im wesentlichen halbkreis- oder U-förmigen Ausnehmung (15) vorgesehen ist, um dementsprechend entweder mit wenigstens einer keil- oder dachförmigen Erhebung (11) oder mit einer Rastnut, jeweils ausgebildet an elastischen Zungen (10) des Flanschelementes (4), federelastisch zusammenzuwirken derart, daß der Zentralkörper, in die im wesentlichen halbkreis- oder U-förmige Ausnehmung (15) eingeführt, selbsttätig gegen unbeabsichtigtes Lösen gesichert ist, wobei die Zungen (10) bei der Montage des Halters (12) elastisch in Richtung der Längsachse des langgestreckten Elementes (2) gebogen werden und zurückfedern, wenn der Halter (12) die Endlage erreicht hat.

2. Vorrichtung nach Anspruch 1,
**dadurch gekennzeichnet, dass**
Zentralkörper (3) und Flanschelement (4) einteilig hergestellt sind.

3. Vorrichtung nach einem der vorhergehenden Ansprüche,
**dadurch gekennzeichnet, dass**
zumindest der Zentralkörper (3) einstückig mit dem langgestreckten Element (2) oder einem Teil davon ausgebildet ist.

4. Vorrichtung nach einem der vorhergehenden Ansprüche,
**dadurch gekennzeichnet, dass**
die Nut (6) radial umlaufend ausgebildet ist.

5. Vorrichtung nach einem der vorhergehenden Ansprüche,
**dadurch gekennzeichnet, dass**
das Flanschelement (4) sich bis zum radial äußeren Umfang erstreckende Schlitze oder Ausnehmungen (9) aufweist, wobei zwischen benachbarten Schlitzen oder Ausnehmungen (9) die Zungen (10) gebildet sind.

6. Vorrichtung nach einem der vorhergehenden Ansprüche,
**dadurch gekennzeichnet, dass**
die Mittel (11) zur federelastischen Verbindung mit dem Halter (12) auf der der Nut (6) zugewandten Seite des Flanschelementes (4) angeordnet sind.

7. Vorrichtung nach einem der vorhergehenden Ansprüche,
**dadurch gekennzeichnet, dass**
die Mittel zur federelastischen Verbindung mit dem Halter (12) wenigstens eine koaxial angeordnete keil- oder dachförmige Erhebung (11) umfassen, wobei sich die keil- oder dachförmige Erhebung (11) zumindest von dem radial äußeren Rand des Flanschelementes (4) aus radial einwärts erhebt.

8. Vorrichtung nach einem der Ansprüche 1 bis 7,
**dadurch gekennzeichnet, dass**
jede Zunge (10) eine koaxial angeordnete keil- oder dachförmige Erhebung (11) aufweist.

9. Vorrichtung nach einem der Ansprüche 7 oder 8,
**dadurch gekennzeichnet, dass**
wenigstens eine der dach- oder keilförmigen Erhebungen (11) beidseitige Schrägen aufweist.

10. Vorrichtung nach einem der Ansprüche 5 oder 6,
**dadurch gekennzeichnet, dass**
jede Zunge (10) als Mittel zur federelastischen Verbindung mit dem Halter (12) eine koaxial angeordnete Rastnut aufweist, die sich zumindest über einen Teil der Breite der Zunge (10) erstreckt.

11. Vorrichtung nach einem der vorherigen Ansprüche,
**dadurch gekennzeichnet, dass**
der die im wesentlichen halbkreis- oder U-förmige Ausnehmung (15) umgebende Bereich (18) des Halters (12) eine größere Dicke aufweist, als benachbarte Bereiche (19).

12. Vorrichtung nach einem der vorherigen Ansprüche,
**dadurch gekennzeichnet, dass**
der Halter (12) in der Schmalseite (14) im wesentlichen symmetrisch ausgebildet ist.

## Claims

1. Device for securing an elongate element (2), having a central body (3), which surrounds the elongate element (2) over part of its longitudinal extent, and a holder (12) with a long side (13) and a narrow side (14), the holder (12) comprising a substantially semicircular or U-shaped recess (15) open towards its edge on its long side (13) and the central body (3) additionally having a radially arranged groove (6) for receiving the holder (12) and a flange element (4) extending substantially radially outwards, which element (4) comprises means (11) for resilient connection with the holder (12) in such a way that the holder (12) introduced into the groove (6) is automatically secured against unintentional detachment in a substantially radial direction, **characterized in that** either at least one groove, recess (16), edge (17) or raised portion is provided on the long side (13) of the holder (12) approximately coaxially with the substantially semicircular or U-shaped recess (15), in order correspondingly to interact resiliently either with at least one wedge- or roof-shaped raised portion (11) or with a latching groove, in each case formed on elastic tongues (10) of the flange element (4), said interaction being such that the central body, introduced into the substantially semicircular or U-shaped recess (15), is secured automatically against unintentional detachment, the tongues (10) being bent elastically in the direction of the longitudinal axis of the elongate element (2) on fitting of the holder (12) and springing back when the holder (12) has reached the end position.

2. Device according to Claim 1, **characterized in that** central body (3) and flange element (4) are made in one piece.

3. Device according to one of the preceding claims, **characterized in that** at least the central body (3) is constructed in one piece with the elongate element (2) or a part thereof.

4. Device according to one of the preceding claims, **characterized in that** the groove (6) is of radially circumferential construction.

5. Device according to one of the preceding claims, **characterized in that** the flange element (4) comprises slots or recesses (9) extending as far as the radially outer circumference, the tongues (10) being formed between adjacent slots or recesses (9).

6. Device according to one of the preceding claims, **characterized in that** the means (11) for resilient connection with the holder (12) are arranged on the side of the flange element (4) facing the groove (6).

7. Device according to one of the preceding claims, **characterized in that** the means for resilient connection with the holder (12) comprise at least one coaxially arranged wedge- or roof-shaped raised portion (11), the wedge- or roof-shaped raised portion (11) rising radially inwards at least from the radially outer edge of the flange element (4).

8. Device according to one of Claims 1 to 7, **characterized in that** each tongue (10) comprises a coaxially arranged wedge- or roof-shaped raised portion (11).

9. Device according to one of Claims 7 or 8, **characterized in that** at least one of the roof- or wedge-shaped raised portions (11) comprises bilateral bevels.

10. Device according to one of Claims 5 or 6, **characterized in that** each tongue (10) comprises, as means for resilient connection with the holder (12), a coaxially arranged latching groove which extends at least over part of the width of the tongue (10).

11. Device according to one of the preceding claims, **characterized in that** the area (18) of the holder (12) surrounding the substantially semicircular or U-shaped recess (15) is thicker than neighbouring areas (19).

12. Device according to one of the preceding claims, **characterized in that** the holder (12) is of substantially symmetrical construction at the narrow side (14).

## Revendications

1. Dispositif pour la fixation d'un élément allongé (2), comprenant un corps central (3) qui entoure l'élément allongé (2) sur une portion de son étendue longitudinale, et un dispositif de fixation (12) avec un côté long (13) et un côté étroit (14), le dispositif de fixation (12) présentant sur son côté long (13) un évidement (15) ouvert vers son bord, de forme sensiblement semi-circulaire ou en forme de U, et le corps central (3) comprenant en outre une rainure radiale (6) pour recevoir le dispositif de fixation (12) ainsi qu'un élément de bride (4) s'étendant essentiellement radialement vers l'extérieur, qui présente des moyens (11) pour la connexion élastique à ressort au dispositif de fixation (12), de telle sorte que le dispositif de fixation (12) introduit dans la rainure (6) soit automatiquement fixé sensiblement dans la direction radiale contre tout détachement accidentel,
**caractérisé en ce que**
l'on prévoit sur le côté long (13) du dispositif de fixation (12) soit au moins une rainure, un évidement (16), un bord (17) soit un rehaussement approximativement coaxialement à l'évidement (15) de forme sensiblement semi-circulaire ou en forme de U, afin de coopérer de manière correspondante, par effet élastique à ressort, soit avec au moins un rehaussement (11) en forme de cale ou de toit, soit avec une rainure d'encliquetage, réalisés dans chaque cas sur des langues élastiques (10) de l'élément de bride (4), de telle sorte que le corps central, inséré dans l'évidement (15) de forme sensiblement semi-circulaire ou en forme de U, soit fixé automatiquement contre tout détachement accidentel, les langues (10), lors du montage du dispositif de fixation (12), étant cintrées élastiquement dans la direction de l'axe longitudinal de l'élément allongé (2) et revenant élastiquement lorsque le dispositif de fixation (12) a atteint la position de butée.

2. Dispositif selon la revendication 1,
**caractérisé en ce que**
le corps central (3) et l'élément de bride (4) sont réalisés d'une seule pièce.

3. Dispositif selon l'une quelconque des revendications précédentes,
**caractérisé en ce que**
au moins le corps central (3) est réalisé d'une seule pièce avec l'élément allongé (2) ou avec une partie de celui-ci.

4. Dispositif selon l'une quelconque des revendications précédentes,
**caractérisé en ce que**
la rainure (6) est réalisée radialement sur toute la périphérie.

5. Dispositif selon l'une quelconque des revendications précédentes,
**caractérisé en ce que**
l'élément de bride (4) présente des fentes ou des évidements (9) s'étendant jusqu'à la périphérie radialement extérieure, les langues (10) étant formées entre des fentes ou des évidements (9) adjacents.

6. Dispositif selon l'une quelconque des revendications précédentes,
**caractérisé en ce que**
les moyens (11) pour la connexion élastique à ressort au dispositif de fixation (12) sont disposés du côté de l'élément de bride (4) tourné vers la rainure (6).

7. Dispositif selon l'une quelconque des revendications précédentes,
**caractérisé en ce que**
les moyens pour la connexion élastique à ressort au dispositif de fixation (12) comprennent au moins un rehaussement (11) disposé coaxialement en forme de cale ou de toit, le rehaussement (11) en forme de cale ou de toit se soulevant radialement vers l'intérieur depuis le bord radialement extérieur de l'élément de bride (4).

8. Dispositif selon l'une quelconque des revendications 1 à 7,
**caractérisé en ce que**
chaque langue (10) présente un rehaussement (11) disposé coaxialement en forme de cale ou de toit.

9. Dispositif selon l'une quelconque des revendications 7 ou 8,
**caractérisé en ce que**
au moins l'un des rehaussements (11) en forme de cale ou de toit présente des biseaux bilatéraux.

10. Dispositif selon l'une quelconque des revendications 5 ou 6,
**caractérisé en ce que**
chaque langue (10) présente, en tant que moyen pour la connexion élastique à ressort au dispositif de fixation (12), une rainure d'encliquetage disposée coaxialement, qui s'étend au moins sur une partie de la largeur de la langue (10).

11. Dispositif selon l'une quelconque des revendications précédentes,
**caractérisé en ce que**
la région (18) du dispositif de fixation (12) entourant l'évidement (15) de forme sensiblement semi-circulaire ou en forme de U présente une plus grande épaisseur que les régions adjacentes (19).

12. Dispositif selon l'une quelconque des revendications précédentes,
**caractérisé en ce que**
le dispositif de fixation (12) est réalisé de manière essentiellement symétrique dans le côté étroit (14).
